# EUROPEAN PATENT APPLICATION

(11) **EP 3 677 346 A1**
(43) Date of publication of application: **08.07.2020**
(21) Application number: 19150191.5
(22) Date of filing: 03.01.2019
(51) Int. Cl.: B05C 17/005, A61C 5/64, A61C 9/00

(54) **OUTLET FOR A STATIC MIXER**

(71) Applicant: Sulzer Mixpac AG, 9469 Haag (Rheintal) (CH)
(72) Inventor: Duarte Rodrigues, Eduardo Manuel, 90599 Dietenhofen (DE); Seiler, Philipp, 9434 Au (CH)
(74) Representative: Manitz Finsterwald Patent- und Rechtsanwaltspartnerschaft mbB

(57) **Abstract**

The invention is directed to an outlet for a static mixer, the outlet comprising a cannula, a housing accommodating part of the cannula within a passage extending through the housing in an axial direction, wherein the cannula is attached to the housing via a joining member permanently fixed to an outer surface of the cannula, with the joining member being arranged within a recess of the housing, and with the joining member being formed from a material different to the material of the cannula and from the material of the housing.

## Description

The present invention is directed at an outlet for a static mixer, the outlet comprising a cannula, a housing accommodating part of the cannula within a passage extending through the housing in an axial direction, wherein the cannula is attached to the housing via a joining member permanently fixed to an outer surface of the cannula, with the joining member being arranged within a recess of the housing. Furthermore, the invention relates to a method for producing such an outlet.

An outlet of this kind is well known in the art and is typically used for discharging a one-, two- or multi-component material from a storage device which may be a one-, two- or multi-component cartridge. Such materials are used in a plethora of fields of application ranging from industrial applications, such as the use of adhesives to bond structural components one to another, or as protective coatings for buildings or vehicles, to medical and dental applications.

The cannula may be rotatable about an axis of rotation extending in the axial direction, which is of particular interest if the cannula is bendable to facilitate the precise position of application of the material discharged from the storage device. However, in order to avoid that the cannula detaches from the housing, in particular by a movement of the cannula in the axial direction, the cannula comprises a joining member being arranged within a recess of the housing, so that the cannula is attached to the housing by a form-fit connection. By way of example, the joining member may be formed as a flared end of the cannula or as a circular rib on an outer surface of the cannula, as is disclosed in US 2011/0189630 A1. Typically the flared end or the circular rib is made of the same material as that of the cannula. However, as the outer diameter of the cannula is decreased and gets less than, for example, 1 mm, it becomes more and more difficult to reliably produce the flared end or the rib.

Furthermore, for an optimum rotatable mounting of the cannula in the housing by means of a form-fit connection, the passage comprises an inner diameter which is nearly approximately the same as an outer diameter of the cannula and an inner diameter of the recess is nearly approximately the same as an outer diameter of the joining member. However, the outer diameter of the joining member is greater than the inner diameter of the passage. It is therefore rather cumbersome to insert the cannula into the passage, in order to properly seat the joining member in the recess formed in the passage.

Hence, it is quite difficult to safely attach the cannula to the housing. Furthermore, if the cannula is attached to the housing by inserting the cannula into the passage, the passage may be impaired. A damage of the passage may result in poorer sealing properties of the outlet, so that the material stored in the storage device cannot properly be discharged from the outlet. Furthermore, a flawed passage may be prone to the ingress of moisture and/or gases into the housing, which ultimately may shorten the storage life of the material stored in the storage device.

It is therefore an object of the invention to overcome the above mentioned problems. In particular, it is an object of the invention to provide an outlet for a static mixer, wherein the cannula can be easily attached to the housing, even if the cannula comprises a small cross-section. Furthermore, it is an object of the invention to provide an outlet for a static mixer, wherein the cannula is attached to the housing in a reproducible manner.

This object is satisfied by an outlet in accordance with claim 1.

The outlet for a static mixer according to the invention comprises a cannula and a housing accommodating part of the cannula within a passage extending through the housing in an axial direction, wherein the cannula is attached to the housing via a joining member permanently fixed to an outer surface of the cannula, with the joining member being arranged within a recess of the housing, and with the joining member being formed from a material different to the material of the cannula and from the material of the housing.

The invention is based on the general idea that an outlet for a static mixer can be more easily produced by forming each of the cannula, the joining member and the housing of different materials. In particular, this allows for a precise assembly of the cannula with regard to the housing, so that after the cannula and the housing have been correctly aligned, the joining member is formed in the recess of the housing by adding the material of which the joining member is made of. As a result, the cannula is attached to the housing in a reproducible manner.

A benefit arising from this kind of attachment is that the outlet comprises a reproducible and precise volume, which allows for discharging a reproducible quantity of a material stored in the storage device and which is of special interest regarding the discharge of small quantities, for example of 2.5 to 75 ml.

Further benefits and advantageous embodiments of the invention will become apparent from the dependent claims, from the description and from the accompanying drawings.

Preferably, the cannula is rotationally journaled within the housing, which in particular is beneficial with regard to a bendable cannula and allows for precise positioning of an end of the cannula and hence application of a material discharged from the storage device via the outlet. For this purpose, it is beneficial that the joining member preferably is only fixedly bonded, in particular chemically bonded, to the cannula and not chemically bonded to the housing.

In this connection it should be noted that the cannula may have a diameter selected in the range of 0.4 to 2 mm, preferably of 0.5 to 1.5 mm, especially wherein the cannula may be made from a material that permits the cannula to be bent relative to the axial direction and that once bent essentially maintains its bent position. Examples of such materials are steel and stainless steel. In this way the cannula can be placed in an improved manner next to the application site. It should be noted that cannulas having diameters of less than 0.8 mm cannot be crimped and still permit a passage of components therethroug.

In this connection it should be noted that the cannula may be formed from a metal or a metal alloy, such as steel and stainless steel.

However, in order to keep the cannula rotatably journaled and prevent an unwanted detachment of the cannula from the housing, the cannula is preferably fixed in the axial direction within the housing. Such kind of fixation may be achieved by a form-fit connection between the joining member fixed to the cannula and the recess formed in the housing.

In particular, such kind of fixation is achieved if the joining member peripherally extends, in particular completely extends, about the outer surface of the cannula. In other words, an outer cross-section of the cannula and the fixed joining member is larger than an inner cross-section of the cannula without the joining member. The form-fit connection is then achieved by journaling the cannula in the passage of the housing and by seating the joining member in the recess of the housing. Moreover, forming the joining member such that it completely extends about the outer surface of the cannula aids in the avoidance of leaks between the cannula and the housing.

Preferably, in order to form a joining member permanently fixed to the cannula, the material of the joining member is added to the cannula after the cannula has been aligned in the housing. For this purpose the housing may comprise an opening for injecting the material of the joining member into the recess, with the opening being in communication, in particular in fluid communication, with the recess. It is to be understood that the material of the joining member is in a liquid or fluid state prior to forming the joining member, so that the material of the joining member can flow into the recess and around the cannula, where the material of the joining member forms the joining member permanently fixed to the cannula on hardening and/or solidifying. In this context it is to be recalled, that the material of the joining member preferably only reacts with the cannula and not with the housing, i.e. it firmly bonds to the cannula but not to the housing in order to ensure the rotational journaling within the housing.

The opening may be an opening of the passage formed in the housing, preferably an outlet opening of said passage. Since the opening is an opening of the outlet opening of the passage, it is basically aligned in parallel to the axial direction and hence may be called an axial opening. Preferably, the material forming the joining member is injected from the outlet opening of the passage, i.e. from a front side of the housing. It is to be understood, that the material forming the joining member could also be injected from a rear side of the housing into the recess, i.e. from an opening opposite to the outlet opening of the passage.

The material forming the joining member may not only be injected into the recess from an opening extending into axial direction but also via an opening that extends radially away from the passage. Preferably, the opening may be arranged at a radial side wall of the housing surrounding said passage.

For an optimum injection of the material forming the joining member into the recess, advantageously, the opening and the recess are separated by a barrier having a predetermined breaking point, with the barrier being configured to rupture on injecting the material of the joining member.

Preferably, the material of the joining member is a plastic material, in particular wherein the plastic material is selected such that it does not form a bond, in particular a chemical bond, with the material of the housing. However, in order to permanently fix the joining member to the cannula, the plastic material preferably is such that it forms a chemical bond with the cannula. In particular, the plastic material on injection into the housing preferably fills a space of the recess present within the housing, with the plastic material forming a chemical bond with the cannula.

The plastic material may be an adhesive, in particular a one-, two- or multi-component adhesive, preferably an epoxy resin. Furthermore, the plastic material may also be a polymeric material, in particular polyoxymethylene (POM) or polybutylene terephthalate (PBT).

There are various possibilities to fill the recess with the material forming the joining member. However, for all filling methods it is common that the material forming the joining member is preferably in a liquid state when it is applied to the opening connected to the recess and may be solidified respectively cured after it has reached the recess.

By way of example, if the material forming the joining member is a resin, it is applied to the opening connected to the recess. Heating of the material forming the joining member reduces its viscosity, which enhances its flow characteristics. After the material forming the joining member has reached the recess further heating and/or stronger heating will enhance solidification, i.e. curing, of the resin, thereby forming a joining member permanently fixed to the cannula.

By way of another example, if the material forming the joining member is a polymeric material, the polymeric material may be in a liquid state when the polymerization process has not been finalized. Again, heating of the polymeric material will decrease its viscosity allowing for the polymeric material to easily flow towards the recess, where it is allowed to solidify. Further heating and/or stronger heating may enhance the polymerization process, which leads to a solidification of the polymeric material, thereby forming a joining member permanently fixed to the cannula.

By way of even a further example, the material forming the joining member may also be a molten polymeric material that is applied to the opening being connected to the recess. Allowing the molten polymeric material to cool down after it has reached the recess will form a joining member that is permanently fixed to the cannula.

Moreover, a molten material may also be used to form a joining member permanently fixed to the cannula by an injection molding process. In particular, the joining member is formed by an injection molding process and is at least partly over-molded onto the cannula.

Furthermore, not only the joining member may be an injection molded part, but also the housing may be an injection molded part, preferably with the housing being formed of a polymeric plastic material, in particular polypropylene (PP) or polyethylene (PE). Injection molding of the housing allows for an easy and cost-efficient production of the housing.

According to one aspect of the invention, the housing is injection molded with the cannula and the joining member being arranged within the housing.

The invention is also directed at a static mixer comprising said outlet and a cartridge with such a static mixer. Preferably, the catridge is a one-, two- or multi-component cartridge, with the cartridge in particular being filled with a material.

By way of example, the material filled in the cartridge may be a liquid, with the liquid preferably being selected from the group of members consisting of a dental fluid, a medical fluid, an ophthalmic fluid, a veterinary fluid and combinations of the foregoing. Furthermore, the material filled in the cartridge may be a powder, with the powder preferably being selected from the group of members consisting of a dental powder, a medical powder, an ophthalmic powder, a veterinary powder and combinations of the foregoing.

Although the invention has been described in the context of a static mixer, it is to be understood that the subject matter of the invention may also be applicable to other applications, such as a dynamic mixer or also a syringe.

The invention will be explained in the following in detail by means of embodiments and with reference to the drawings, wherein:
- Fig. 1: shows a cross-sectional overview of an outlet comprising a cannula, a housing and a joining member which attaches the cannula to the housing;
- Fig. 2a: shows a cross-sectional view of an outlet according to a first design, with the cannula and the housing being arranged in a pre-attached state;
- Fig. 2b: shows the outlet of Fig. 2a with the cannula and the housing being arranged in an attached state;

- Fig. 3: shows cross sectional view of an outlet according to a second design, with the cannula and the housing being arranged in an attached state;
- Fig. 4a: shows a cannula with a permanently fixed joining member being arranged in a first injection mold; and
- Fig. 4b: shows the cannula of Fig. 4a being over-molded with a housing by means of a second injection mold.

In the following the same reference numerals will be used for parts having the same or equivalent function. Any statements made having regard to the direction of a component are made relative to the position shown in the drawing and can naturally vary in the actual position of application.

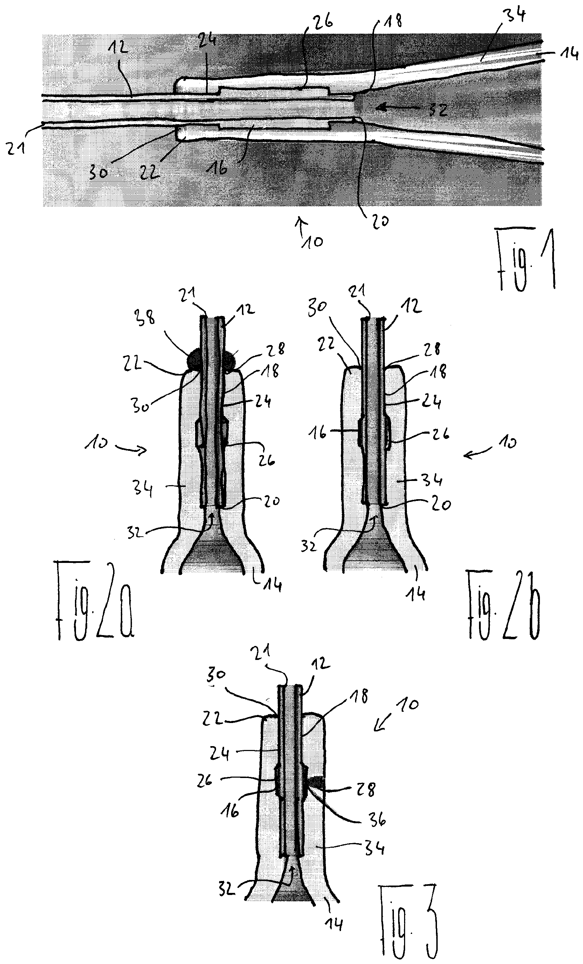

Figs. 1, 2b, 3 and 4b each show a cross-sectional view of an outlet 10 for a static mixer. The outlet 10 comprises a cannula 12, a housing 14 and a joining member 16 which attaches the cannula 12 to the housing 14.

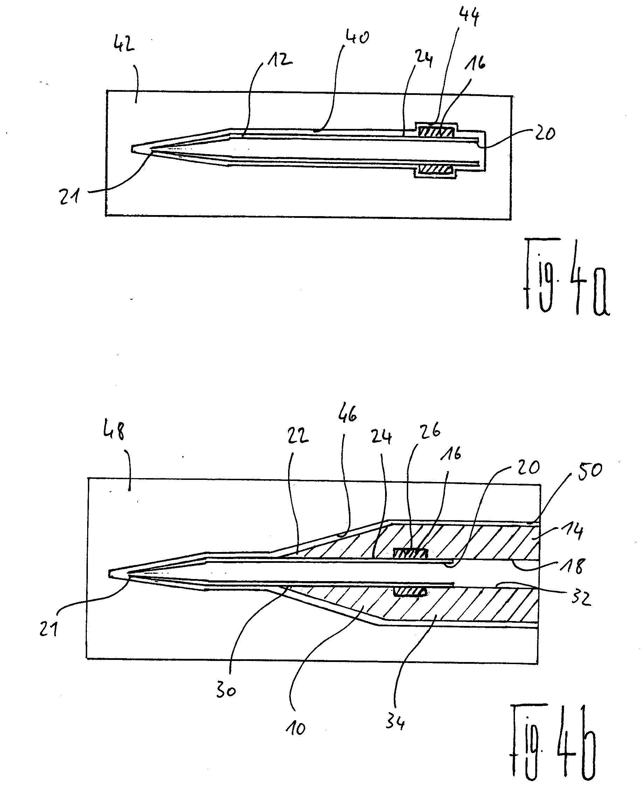

Fig. 2a shows a cross-sectional view of the outlet 10 with the cannula 12 and the housing 14 being arranged in a pre-attached state, whereas Fig. 2b shows a cross-sectional view of the outlet 10 with the cannula 12 and the housing 14 being attached to each other. Fig. 4a and 4b show different steps of a method for producing an outlet 10 in a cross-sectional view.

The outlet 10 is configured to be used e.g. with a static mixer (not shown) comprising such an outlet 10. The static mixer may be used to mix a one-, two- or multi-component material discharged from a one- two or multi-component cartridge which is also not shown.

The housing 14 comprises a passage 18 that extends through the housing 14 in an axial direction. The passage 18 of the housing 14 accommodates part of the cannula 12. In particular, as can be seen best from Fig. 4b, a rear end 20 of the cannula 12 opposite to a tip portion 21 of the cannula 12 is journaled in the passage 18 at a tip part 22 of the housing 14.

The joining member 16 is permanently fixed to an outer surface 24 of the cannula 12 and peripherally extends about the outer surface 24 of the cannula 12. The joining member 16 serves for an attachment of the cannula 12 to the housing 14, this is achieved by arranging the joining member 16 in a recess 26 of the housing 14. As can be seen best from Figs. 1, 2a, 2b, 3 and 4b, the recess 26 is located in the passage 18 of the housing 14 so that the cannula 12 is attached to the housing 14 by means of a form-fit connection.

Although the cannula 12 is attached to the housing 14 in a manner fixed against axial displacement along the axial direction, the cannula 12 remains rotatable about an axis of rotation which is basically aligned in parallel to the axial direction. Yet, the form-fit connection between the cannula 12 and the housing 14 by means of the joining member 16 and the recess 26 prevents any significant movement of the cannula 12 in the axial direction with regard to the housing 14.

A rotatable mounting of the cannula 12 in the housing 14 is particularly beneficial for a bendable cannula 12 and allows for a larger degree of freedom of the cannula 12. By bending and rotating the cannula 12, the tip portion 21 of the cannula 12 can be oriented in a suitable manner for a more precise application of the material stored in the cartridge.

In order to allow the joining member 16 to be permanently fixed to the cannula 12 and the cannula 12 to be rotatable with regard to the housing 14, each of the cannula 12, the housing 14 and the joining member 16 is made from a different material. In particular, the joining member 16 is formed from a material that is different to the material of the cannula 12 and from the material of the housing 14. Furthermore, the material of the joining member 16 only chemically bonds to the cannula 12 but does not chemically bond to the housing 14.

The cannula 12 may be made of a metal material, preferably of a steel material. However, the cannula 12 may also be made of a plastic material.

The housing 14 may be an injection molded part formed from a polymeric plastic material, such as polypropylene (PP) or polyethylene (PE).

The joining member 16 may be made of a plastic material, such as an adhesive or a polymeric material. For example, the adhesive may be a one-, two- or multicomponent adhesive, such as an epoxy resin. The polymeric material may be for example polyoxymethylene (POM) or polybutylene terephthalate (PBT). In this context it should be noted that the plastic material of the joining member 16 is selected such that it does not form a bond, in particular a chemical bond, with the material of the housing 14.

The cannula 12 may be attached to the housing 14 in different manners. A first method of attaching the cannula 12 to the housing 14 will be now described with regard to Figs. 2a, 2b and 3.

According to the first method, the joining member 16 required for attaching the cannula 12 to the housing 14 is formed by injecting the material forming the joining member 16 into the recess 26. For this purpose, the housing 14 comprises an opening 28 for injecting the material of the joining member 16, with the opening 28 being in communication with the recess 26.

According to a first design of the outlet 10 shown in Figs. 2a and 2b, the opening 28 is an outlet opening 30 of the passage 18. However, the opening 28 may also be an opening 32 opposite to the outlet opening 30 of the passage 18.

According to a second design of the outlet 10 shown in Fig. 3, the opening 28 extends radially away from the passage 18. As can be also seen from Fig. 3, the opening 28 is arranged at a radial side wall 34 of the housing 14 surrounding the passage 18. Furthermore, for optimum injection results, the opening 28 comprises a barrier 36 having a predetermined breaking point so that the barrier 36 is configured to rupture on injecting the material forming the joining member 16. It should be noted that the opening 28 of the outlet 10 according to the first design may also comprise such a barrier 36.

The cannula 12 is attached to the housing 14 in the following manner. First the cannula 12 is inserted at least in part into the passage 18 so that at least the rear end 20 of the cannula 12 and the recess 26 of the housing 14 are aligned at the same axial height. Next, the material forming the joining member 16 is applied to the opening 28 in a liquid state, for example by dropping a droplet 38 of the material of the joining member 16 onto the opening 28 (see Fig. 2a). If the material of the joining member 16 is dropped on the opening 28, capillary forces will aid the material of the joining member 16 to flow towards the recess 26. However, the material of the joining member 16 may also be directly injected into the recess 26 via the opening 28 to fill a space of the recess 26 with the material of the joining member 16.

As the material of the joining member 16 has reached the recess 26, it is allowed to react with the cannula 12 but not with the housing 14, thereby forming the joining member 16 by solidification. Ultimately an outlet 10 is obtained, which comprises a cannula 12 accommodated in a housing 10 by means of a joining member 16.

Now turning to Figs. 4a and 4b, a second method of attaching the cannula 12 to the housing 14 will be described.

In a first step according the second method, the cannula 12 is placed in a cavity 40 of a first injection mold 42. The cavity 40 comprises a recess 44, which is a negative form of the joining member 16. Next, the material forming the joining member 16 being different from the material of the cannula 12 is injected at least into the recess 44 of the first injection mold 42. On solidification of the material of the joining member 16, a cannula 12 with a permanently fixed joining member 16 is formed. Subsequently, the cannula 12 with the joining member 16 is removed from the first injection mold 42 and placed into a cavity 46 of a second injection mold 48. The cavity 46 of the second injection mold 48 is a negative shape 50 of the housing 14. The cannula 12 with the joining member 16 is aligned in the second injection mold 48 such that the joining member 16 will be received in the housing 14 after the injection molding of the material of the housing 14. Injection of the material of the housing 14 into the second injection mold 48 will form the housing 14 surrounding the cannula 12 and the joining member 16 after solidification of the material of the housing 14. Since the material of the joining member 16 and the material of the cannula 12 will not react with the material of the housing 14, the cannula 12 is rotatably received within the housing 14 to form the outlet 10.

In this connection it should be noted that the first and second molds 42, 48 may be present in the same mold (not shown), with the respective components forming the first and second molds 42, 48 being introducible into a respective cavity in the same mold.

It should further be noted that a height of the joining member 16 may correspond to a depth of the recess 26 in the radial direction perpendicular to the axial direction of the passage 18.

It should further be noted that a length of the joining member 16 may correspond to a length of the recess 26 in a direction in parallel to the axial direction of the passage 18.

In this connection it should be noted that a depth of the recess may correspond to between 5 % to 50 %, preferably 10 to 30%, of a wall thickness of the housing 14 forming the passage 18, in order to form a connection between the joining member 16 and the housing 14 that prevents an axial movement of the cannula 12 relative to the housing 14, but permits a rotational movement of the cannula 12 relative to the housing 14.

It should further be noted in this connection that a wall thickness of the housing 14 may be constant over a length of at least 50% of a length of the passage 18, preferably over a length of at least 80 % of the length of the passage 18.

Alternatively a wall thickness of the housing 14 may increase between the opening 30 and the opening 32 over a length of the passage 18 by no more than 20%.

It should further be noted that a length of the recess 26 in a direction in parallel to the axial direction of the passage 18 may amount to 5 to 40 %, preferably 10 to 30%, of the length of the passage 18, in order to form a connection between the joining member 16 and the housing 14 that prevents an axial movement of the cannula 12 relative to the housing 14, but permits a rotational movement of the cannula 12 relative to the housing 14, while at the same time ensuring a seal between the cannula 12 and the housing 14.

It should further be noted that the recess 26 is arranged between an inlet and an outlet opening 30, 32 of the passage 18. Typically the recess 26 may be arranged between 15% to 85% of the length of the passage 18 between the opening 30 and the opening 32, preferably between 25% to 60% of the length of the passage 18 between the opening 30 and the opening 32.

### List of Reference Signs

- 10: outlet
- 12: cannula
- 14: housing
- 16: joining member
- 18: passage
- 20: rear end of 12
- 21: tip portion of 12
- 22: tip part of 14
- 24: outer surface of 12
- 26: recess
- 28: opening
- 30: outlet opening
- 32: opening opposite to 30
- 34: side wall
- 36: barrier
- 38: droplet
- 40: cavity
- 42: first injection mold
- 44: recess
- 46: cavity
- 48: second injection mold
- 50: negative shape of 14

## Claims

1. An outlet (10) for a static mixer, the outlet (10) comprising a cannula (12), a housing (14) accommodating part of the cannula (12) within a passage (18) extending through the housing (14) in an axial direction, wherein the cannula (12) is attached to the housing (14) via a joining member (16) permanently fixed to an outer surface (24) of the cannula (12), with the joining member (16) being arranged within a recess (26) of the housing (14), and with the joining member (16) being formed from a material different to the material of the cannula (12) and from the material of the housing (14).

2. An outlet (10) in accordance with claim 1, wherein the joining member (16) is not bonded, in particular chemically bonded, to the housing (14).

3. An outlet (10) in accordance with claim 1 or 2, wherein the joining member (16) peripherally extends, in particular completely extends, about the outer surface (24) of the cannula (12).

4. An outlet (10) in accordance with at least one of the preceding claims, wherein the cannula (12) is arranged in the housing (14) rotatable about an axis of rotation extending in the axial direction and the cannula (12) is axially held in position in the housing (14) by means of the joining member (16), in particular wherein the cannula (12) is configured to be bendable relative to the axial direction.

5. An outlet (10) in accordance with at least one of the preceding claims, wherein the housing (14) comprises an opening (28) for injecting the material of the joining member (16) into the recess (26), with the opening (28) being in communication with the recess (26).

6. An outlet (10) in accordance with claim 5, wherein the opening (28) is an opening (30, 32) of the passage (18) formed in the housing (14), preferably an outlet opening (30) of said passage (18), or wherein the opening (28) extends radially away from the passage (18), preferably wherein the opening (28) is arranged at a radial side wall (34) of the housing (14) surrounding said passage (18).

7. An outlet (10) in accordance with claim 6, wherein, the opening (28) and the recess (26) are separated by a barrier (36) having a predetermined breaking point, with the barrier (36) being configured to rupture on injecting the material of the joining member (16) into the recess (26).

8. An outlet (10) in accordance with at least one of the preceding claims, wherein the material of the joining member (16) is a plastic material, in particular wherein the plastic material is selected such that it does not form a bond with the material of the housing (14).

9. An outlet (10) in accordance with claim 8, wherein the plastic material fills a space of the recess (26) present within the housing (14) on injection, with the plastic material forming a chemical bond with the cannula (12).

10. An outlet (10) in accordance with claim 8 or 9, wherein the plastic material is an adhesive, in particular a one-, two- or multi-component adhesive, preferably an epoxy resin.

11. An outlet (10) in accordance with claim 8 or 9, wherein the plastic material is a polymeric material, in particular polyoxymethylene (POM) or polybutylene terephthalate (PBT).

12. An outlet (10) in accordance with at least one of the preceding claims, wherein the joining member (16) is formed by an injection molding process and is at least partly overmolded onto the cannula (12).

13. An outlet (10) in accordance with at least one of the preceding claims, wherein the housing (14) is an injection molded part, preferably with the housing (14) being formed of a polymeric plastic material, in particular polypropylene (PP) or polyethylene (PE).

14. An outlet (10) in accordance with claim 13, wherein the housing (14) is injection molded with the cannula (12) and the joining member (16) being arranged within the housing (14); and/or wherein the cannula (12) has a diameter selected in the range of 0.4 to 2 mm, preferably of 0.5 to 1.5 mm, especially wherein the cannula (12) is made from a material that permits the cannula (12) to be bent relative to the axial direction and that once bent essentially maintains its bent position, for example, wherein the cannula (12) is made from a metal or metal alloy, such as steel or stainless steel.

15. A static mixer comprising an outlet (10) in accordance with at least one of the preceding claims.

16. A cartridge comprising a static mixer according to claim 15, preferably wherein the cartridge is a one-, two- or multi-component cartridge, with the cartridge in particular being filled with a material.

17. A method for producing an outlet (10) according to at least one of the claims 1 to 14, the method comprising the steps of:
- inserting a cannula (12) at least in part into a passage (18) extending in axial direction through a housing (14), with the housing (14) comprising a recess (26);
- injecting a material, preferably an adhesive, being a different material to a material of the cannula (12) and from a material of the housing (14) into an opening (28) of the housing (14), with the opening (28) being in communication with the recess (26); and
- letting the injected material react with the cannula (12) but not with the housing (14), thereby forming a joining member (16) that is permanently fixed to an outer surface (24) of the cannula (12) and that is arranged within the recess (26) of the housing (14), so that the cannula (12) is attached to the housing (14) via the joining member (16).

18. A method producing an outlet (10) according to at least one of the claims 1 to 14, the method comprising the steps of:
- placing a cannula (12) at least in part into a cavity (40) of a first injection mold (42), with the cavity (40) comprising a recess (44);
- injecting a material being different from a material of the cannula (12) into the mold, thereby filling at least the recess (44) of the cavity (40) to form a cannula (12) with a joining member (16) being permanently fixed to an outer surface (24) of the cannula (12);
- placing the cannula (12) with the permanently fixed joining member (16) into a cavity (46) of a second injection mold (48), with the cavity (46) of the second injection mold (48) having a negative shape of a housing (14) for accommodating part of the cannula (12) within a passage (18) extending through the housing (14) in an axial direction; and
- injecting a material being different from the material of the cannula (12) and from the material of the joining member (16), thereby forming said housing (14), so that the joining member (16) is arranged within a recess (26) of the housing (14).
